# EUROPÄISCHE PATENTSCHRIFT

(11) **EP 0 380 749 B1**
(45) Veröffentlichungstag und Bekanntmachung des Hinweises auf die Patenterteilung: **29.12.1993**
(21) Anmeldenummer: 89114842.1
(22) Anmeldetag: 10.08.1989
(51) Int. Cl.: F16J 15/34

(54) **Gleitringdichtung**
Mechanical seal
Joint mécanique

(30) Priorität: 01.02.1989 DE 8901110 U
(43) Veröffentlichungstag der Anmeldung: 08.08.1990
(73) Patentinhaber: Feodor Burgmann Dichtungswerke GmbH & Co., D-82515 Wolfratshausen (DE)
(72) Erfinder: Kollinger, Rudolf, Dipl.-Ing., D-8034 Germering (DE); Steigenberger, Georg, D-8193 Holzhausen (DE)
(74) Vertreter: Fehners, Klaus Friedrich, Dipl.-Ing., Dipl.-Wirtsch.-Ing.

(56) Entgegenhaltungen:
- DE-A- 3 046 492
- DE-U- 7 118 511
- GB-A- 1 007 552

## Beschreibung

Die Erfindung betrifft eine Gleitringdichtung zur Abdichtung einer um ihre Längsachse umlaufenden Welle, welche durch eine Wandung geführt ist, die einen unter einem ersten Druck stehenden, das abzudichtende Fluid enthaltenden ersten Raum von einem zweiten Raum mit einem zweiten Druck trennt, enthaltend eine drehfest an der Wandung gehaltenen und gegen diese abgedichtete erste Ringanordnung, die an ihrer einen axialen Stirnfläche eine kreisringförmige, zur Längsachse koaxiale und in einer von der Längsachse lotrecht durchgedrungenen Radialebene gelegene erste Gleitfläche aufweist, und enthaltend eine drehfest an der Welle gehaltene und gegen diese abgedichtete zweite Ringanordnung, die an ihrer einen, der ersten Gleitfläche zugekehrten axialen Stirnfläche eine zweite Gleitfläche aufweist, die an der ersten Gleitfläche unter Bildung gemeinsamer ringförmiger Berührungsflächen zur Anlage bringbar ist, wobei eine der Ringanordnungen in Richtung der Längsachse verschiebbar und durch wenigstens eine Feder gegen die andere Ringanordnung vorgespannt ist, wobei eine der beiden Ringanordnungen einen aus einem Material guter Gleiteigenschaft mit einem Elastizitätsmodul kleiner als 4 x 10⁴ N/mm² bestehenden ringförmigen Körper enthält, an dem eine Gleitfläche ausgebildet ist und der an seinem von dieser Gleitfläche abgewandten axialen Endabschnitt zwischen ringförmigen Teilen eingespannt ist, die beide aus einem Material mit einem Elastizitätsmodul größer als 10 x 10⁴ N/mm² bestehen und die radial nach innen gerichtete Kräfte auf den Außenumfang und radial nach außen gerichtete Kräfte auf den Innenumfang des ringförmigen Körpers ausüben und wobei die andere der beiden Ringanordnungen wenigstens an dem ihre Gleitfläche aufweisenden Bestandteil aus einem Material hoher Verschleißfestigkeit mit einem Elastizitätsmodul größer als 10 x 10⁴ N/mm2 ausgebildet ist.

Bei einer bekannten Gleitringdichtung dieser Art (Mayer, Axiale Gleitringdichtungen, VDI-Verlag GmbH Düsseldorf, 7. Auflage 1982, Seite 282) enthält die eine Ringanordnung einen ringförmigen Körper, der zwischen zwei aus Metall bestehenden ringförmigen Teilen eingeschrumpft ist, von denen das eine Teil den Körper radial außen umfaßt und eine Trägerhülse bildet, die axial gegen Federn verschieblich, jedoch drehfest im Dichtungsgehäuse gelagert ist. Die freien Stirnflächen der beiden ringförmigen Teile liegen in einer gemeinsamen Ebene, welche bezüglich der durch die Gleitfläche gehenden Radialebene zurückversetzt ist, so daß nur der ringförmige Körper alleine mit einem kleinere radiale Breite aufweisenden, die Gleitfläche enthaltenden Abschnitt frei vorsteht und nur mit dieser Gleitfläche an der Gleitfläche der mit der Welle rotierenden Ringanordnung anliegt.

Es ist auch bekannt (DE-GM 7 118 511), die in einer mit der Welle rotierenden Ringanordnung enthaltenen, aus Stahl bestehenden beiden ringförmigen Teile jeweils im Querschnitt rechteckig auszubilden, wobei der aus Kohle oder Sinterwerkstoff bestehende ringförmige Körper ebenfalls rechteckigen Querschnitt besitzt und nur in seinem radial mittleren Abschnitt über die freien Stirnflächen der ringförmigen Teile vorsteht und nur mit diesem, die Gleitfläche aufweisenden Abschnitt an der Gleitfläche der drehbar gelagerten anderen Ringanordnung anliegt.

Nachteilig ist bei den bekannten Gleitringdichtungen, daß sie besonders bei hohen Drücken und auch durch Temperatureinflüsse die Gleitfläche des ringförmigen Körpers dergestalt verformt, daß eine starke Leckage und/oder große Reibungsverluste auftreten. Werden Gleitringdichtungen in der bekannten Ausbildung zur Abdichtung abrasiver Fluida eingesetzt, ist es erforderlich, sowohl den mit der Welle rotierenden, als auch den drehfest am Dichtungsgehäuse gehaltenen ringförmigen Körper, welche beide die aneinanderliegenden Gleitflächen aufweisen, aus einem Werkstoff großer Verschleißfestigkeit und Härte auszubilden, d.h. mit einem Elastizitätsmodul von größer als 10 x 10⁴ N/mm². Bei derartigen Werkstoff-Paarungen ist aber häufig schon nach kurzer Betriebszeit eine Aufrauhung bzw. Zerstörung der aneinanderliegenden Gleitflächen festzustellen, sowie eine zeitlich sich ändernder und hoher Wert für die Reibungs-Verlustleistung.

Aufgabe der Erfindung ist es, eine Gleitringdichtung zu schaffen, welche eine günstige Geometrie der Gleitflächen auch bei hohen Drücken und Temperaturen und damit geringe Leckagewerte und Reibungs-Verlustleistung aufweist, Notlaufeigenschaften besitzt und auch zur Abdichtung abrasiver Fluida geeignet ist.

Ausgehend von einer Gleitringdichtung der eingangs genannten Art wird diese Aufgabe dadurch gelöst, daß erfindungsgemäß von den in der einen Ringanordnung enthaltenen ringförmigen Teilen mit einem größeren Elastizitätsmodul als 10 x 10⁴ N/mm² wenigstens eines sich mit einem kragenartigen Fortsatz bis zur Radialebene erstreckt und in dieser eine weitere kreisringförmige Gleitfläche bildet, welche unmittelbar an die Gleitfläche des einen Elastizitätsmodul von weniger als 4 x 10⁴ N/mm² aufweisenden ringförmigen Körpers angrenzt, wobei diese Gleitflächen an der Gleitfläche der anderen Ringanordnung anliegen.

Vorzugsweise hält das sich bis zur Radialebene erstreckende ringförmige Teil an dem von seiner Gleitfläche abgewandten axiale Ende einen axialen Abstand und/oder radialen Abstand zu dem anderen ringförmigen Teil ein. Hierdurch wird erreicht, daß das ringförmige Teil, welches einen hohen Elastizitätsmodul aufweist und daher nur wenig verformbar ist, eine wenn auch nur sehr geringfügige relative Beweglichkeit gegenüber dem aus wesentlich elastischerem Werkstoff bestehenden ringförmigen Körper und auch gegenüber dem anderen ringförmigen Teil erhält, so daß sich die Gleitfläche dieses ringförmigen Teils einstellen kann und durch Druck- und Temperaturänderungen hervorgerufene Verformungen von dem ringförmigen Körper aufgenommen werden.

Hinsichtlich der Dichtspaltgeometrie und des Laufverhaltens besonders günstige Verhältnisse ergeben sich, wenn sich nur eines der einen größeren Elastizitätsmodul als 10 X 10⁴ N/mm aufweisenden ringförmigen Teile bis zur Radialebene erstreckt und dieses Teil auf der dem niedrigerem Druck zugewandten Seite des ringförmigen Körpers angeordnet ist. Eine solche Ausbildung bewirkt, daß im Falle einer insgesamt großen Druckdifferenz zwischen dem äußeren und inneren Umfang der Gleitflächen, eine große Verformung der Ringanordnung eintritt, welche wiederum dazu führt, daß im wesentlichen nur die Gleitfläche des ringförmigen Körpers anliegt. Dadurch vergrößern sich die in Axialrichtung wirkenden hydrostatischen Kräften und es vergrößert sich damit die Anpreßkraft der Gleitflächen. Der voraussetzungsgemäß einen niedrigeren Elastizitätsmodul aufweisende ringförmige Körper kann jedoch aus einem Werkstoff guter Gleiteigenschaften ausgebildet werden (z. B.Kohle), so daß die Reibungswerte gering gehalten werden können. Im Falle einer relativ kleinen Druckdifferenz erfolgt auch eine entsprechend geringere Verformung der Ringanordnung, so daß im wesentlichen nur deren ringförmiger Teil mit seiner Gleitfläche anliegt. Hierdurch liegt zwar eine ungünstigere Werkstoffpaarung hart - hart vor, die auch ungünstigere Gleiteigenschaften aufweist, wobei sich aber die durch die hydrostatischen Kräfte bedingte axiale Anpreßkraft reduziert so daß insoweit der Reibungsverlust und auch der Verschleiß an der Gleitfläche geringer wird. Es ist sogar eine Entlastung möglich, die zu einem berührungsfreien Lauf führt.

Weitere Merkmale und Vorteile der Erfindung ergeben sich aus den Unteransprüchen und der nachfolgenden Beschreibung der Ausführungsbeispiele.

Die Erfindung wird nachstehend beispielsweise an Hand einer einfachwirkenden wirkenden Gleitringdichtung mit äußerer Druckbeaufschlagung näher erläutert. In den Zeichnungen zeigt:
- Fig. 1: einen Längsschnitt durch die obere Hälfte der Gleitringdichtung;
- Fig. 2: einen Längsschnitt durch die in der Gleitringdichtung gemäß Fig. 1 enthaltenen erste Ringanordnung;
- Fig. 3: einen Längsschnitt durch eine abgewandelte Ausführungsform einer für eine Gleitringdichtung gemäß Fig. 1 verwendbaren Ringanordnung und
- Fig. 4: einen Längsschnitt durch eine andere abgewandelte Ausführungsform einer für eine Gleitringdichtung gemäß Fig. 1 verwendbaren ersten Ringanordnung.

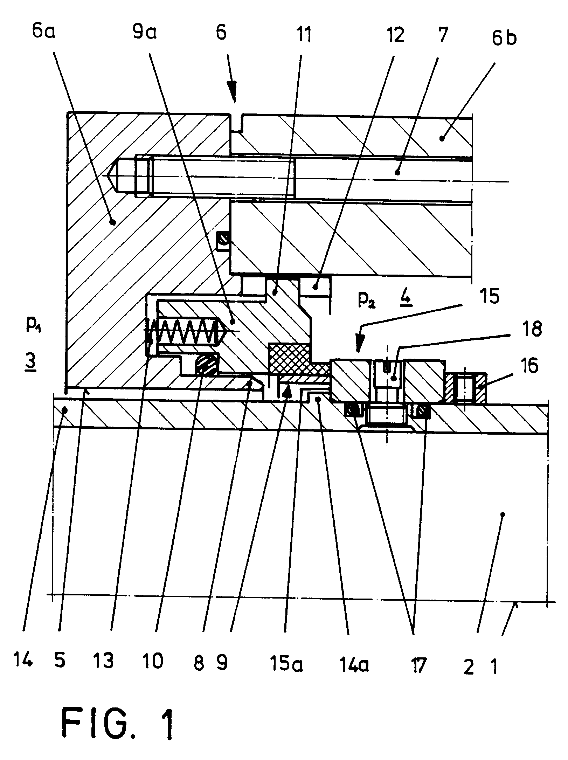

Die in Fig. 1 dargestellte Gleitringdichtung dient zur Abdichtung einer um ihre Längsachse 1 umlaufenden Welle 2 an der Durchtrittstelle durch eine (nicht dargestellte) Wandung, welche einen ersten Raum 3, der ein unter einem ersten Druck p₁ stehendes Fluid enthält, von einem zweiten Raum 4 trennt, der unter einem Druck p₂ stehenddes Fluid enthält. Im vorliegenden Beispiel befindet sich im zweiten Raum 4 das abzudichtende Fluid (bei doppeltwirkender Ausbildung eine Sperr-, Kühl- oder Schmierflüssigkeit, die durch eine nicht dargestellte nachgeschaltete weitere Dichtung vom abzudichtenden Fluid getrennt ist), während der erste Raum 3 von der freien Atmosphäre gebildet ist. Der Druck p₂ ist somit größer als der Druck p₁. Die Welle 2 erstreckt sich durch eine Bohrung 5 in einem stirnseitigen Deckelteil 6a eines mehrteiligen, durch Schrauben 7 zusammengehaltenen Dichtungsgehäuses 6, das seinerseits an der vorerwähnten Wandung befestigt ist.

Im Bereich der Bohrung 5 steht von dem Deckelteil 6a ein rohrförmiger Kragen 8 zum zweiten Raum 4 vor, auf dessen zur Längsachse 1 koaxialen zylindrischen äußeren Umfangsfläche eine in ihrer Gesamtheit mit 9 bezeichnete erste Ringanordnung axial verschieblich angeordnet und durch eine als O-Ring ausgebildete Sekundärdichtung 10 gegen das Dichtungsgehäuse 6 abgedichtet ist. Eine von der ersten Ringanordnung 9 radial nach außen vorstehende Nase 11 steht in einem achsparallelen Schlitz 12 ein. Dieser hindert die Ringanordnung 9 an einer relativen Verdrehung und ist in einem vom Deckelteil 6a vorstehenden und in einen zylindrischen Teil 6b des Dichtungsgehäuses 6 einstehenden Kragen ausgebildet. Eine Mehrzahl von Schraubendruckfedern 13 spannt die erste Ringanordnung 9 axial in Richtung zum zweiten Raum 4 vor. Die erste Ringanordnung 9, welche nachstehend noch ausführlicher erläutert wird, weist eine erste Gleitfläche auf, die in einer von der Längsachse 1 lotrecht durchdrungenen Radialebene R liegt.

Auf die Welle 2 ist eine mit einem radial nach außen vorstehenden Bund 14a versehene Wellenhülse 14 aufgeschoben, deren vom zweiten Raum 4 abgekehrtes Ende von der Bohrung 5 des Deckelteils 6a des Dichtungsgehäuses 6 mit geringem radialen Spiel umschlossen wird. Auf das andere Ende der Wellenhülse 14 ist eine zweite Ringanordnung 15 aufgeschoben, deren dem ersten Raum 3 zugekehrte, am Bund 14a anliegende Stirnseite eine ebene Gleitfläche 15a aufweist, die in der Radialebene R liegt und an die die erste Gleitfläche der ersten Ringanordnung 9 mittels der Federn 13 angepreßt wird. Die zweite Ringanordnung 15 stützt sich mit ihrer anderen axialen Stirnfläche gegen einen Stellring 16 ab und ist mittels Hilfsdichtungen 17 gegen die Wellenhülse 14 abgedichtet, die ihrerseits gegen die Welle 2 abgedichtet ist. Eine in eine Gewindebohrung der Wellenhülse 14 eingeschraubte Stiftschraube 18 fixiert die Wellenhülse an der Welle 2 und hindert mit ihrem in eine Bohrung der zweiten Dichtungsanordnung 15 einstehenden Kopf letztere an einer relativen Drehung bezüglich der Wellenhülse 14 und der Welle 2.

Die zweite Ringanordnung 15 ist im vorliegenden Beispiel als einstückiger, im Querschnitt rechteckiger Körper veranschaulicht, kann aber auch eine komplexere Ausbildung aufweisen und mehrteilig aufgebaut sein. Sie kann beispielsweise am radial äußeren Umfang eine Bandage und/oder Mittel zur Flüssigkeitsförderung enthalten und es können auch bekannte Maßnahmen getroffen werden, um eine geringfügigere Verformung der zweiten Gleitfläche zu erzielen, die ein hydrodynamisches Laufverhalten der Gleitringdichtung ermöglicht. Wesentlich ist aber, daß die zweite Ringanordnung 15 wenigstens im Bereich ihrer Gleitfläche 15a aus einem Material hoher Verschleißfestigkeit gebildet ist, das einen Elastizitätsmodul besitzt, der größer als 10 x 10⁴ N/mm² ist.

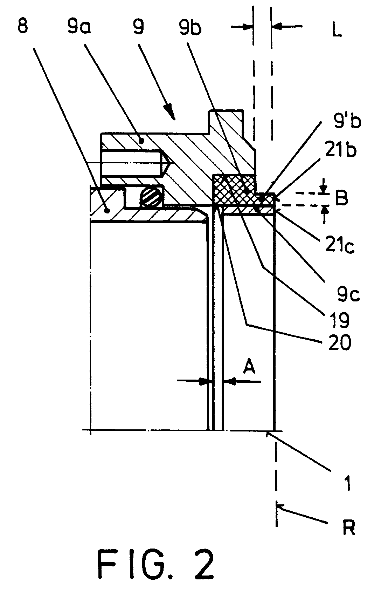

Die erste Ringanordnung 9, welche in Fig. 2 einzeln veranschaulicht ist, setzt sich aus einem ersten ringförmigen Teil 9a aus Stahl, einem zweiten ringförmigen Teil (Innenbandage) 9c aus Siliziumkarbid und einem ringförmigen Körper 9b aus Kohle zusammen. Die beiden ringförmigen Teile 9a, 9c weisen daher einen Elastizitätsmodul auf, der größer als 10 x 10⁴ N/mm² ist, während der ringförmige Körper 9b einen wesentlich kleineren Elastizitätsmodul als 4 x 10⁴ N/mm² besitzt. Aufgrund der Materialwahl weist das ringförmige Teil 9c auch eine besonders hohe Verschleißfestigkeit auf, ebenso wie die zweite Ringanordnung 15, für welche vorteilhaft ebenfalls Siliziumkarbid verwendet wird.

Das erste ringförmige Teil 9a führt die erste Ringanordnung 9 verschieblich auf den Kragen 8 und trägt die vom Außenumfang vorstehende Nase 11. In der Bohrung dieses ringförmigen Teils 9a steht radial nach innen eine umlaufende Rippe vor, von der ausgehend sich zu jeder axialen Stirnfläche ein erweiterter Bohrungsteil mit zylindrischen Innenfläche erstreckt. In dem ersten Bohrungsteil 19 ist der ringförmige Körper 9b mit einem radial außen im Durchmesser vergrößerten Ende eingesetzt, dergestalt, daß dieser Körper mit einem geringere radiale Breite B aufweisenden rohrförmigen Abschnitt 9′b über die Stirnfläche des ersten ringförmigen Teils 9a um die Länge L vorsteht. Der Durchmesser der zylindrischen Innenfläche 20 des ringförmigen Körpers 9b ist gleichgroß wie derjenige der innen vorstehenden Rippe des ringförmigen Teils 9a. An der Frontseite des rohrförmigen Abschnitts 9′b ist eine Gleitfläche 21b ausgebildet, welche in der Radialebene R liegt.

In der zylindrischen Innenfläche 20 des ringförmigen Körpers 9b ist das in Form eines Hohlzylinders (Rohres) ausgebildete zweite ringförmige Teil 9c angeordnet. Dieses weist an einem axialen

Ende eine Gleitfläche 21c auf, die sich in der gleichen Radialebene R wie die Gleitfläche 21b befindet. Beide Gleitflächen 21b, 21c liegen an der Gleitfläche 15a der zweiten Ringanordnung 15 an, soweit die erste Ringanordnung 9 keine Verformung, beispielsweise durch den Druck des abzudichtenden Fluid erleidet. Das andere axiale Ende des zweiten ringförmigen Teils 9c hält einen axialen Abstand A zu dem ringförmigen Teil 9a ein, d.h. die beiden ringförmigen Teile 9a, 9c sind nicht unmittelbar, sondern nur über den ringförmigen Körper 9b miteinander verbunden, so daß aufgrund des relativ geringen Elastizitätsmoduls des ringförmigen Körpers 9b eine gewisse, wenn auch kleine relative Bewegung der genannten drei Bauteile ermöglicht wird.

Die beiden ringförmigen Teile 9a, 9c und der ringförmige Körper 9b bilden einen Schrumpfverband, d.h. die beiden ringförmigen Teile spannen unter Ausübung radialer Druckkräfte das Ende des ringförmigen Körpers 9b zwischen sich ein.

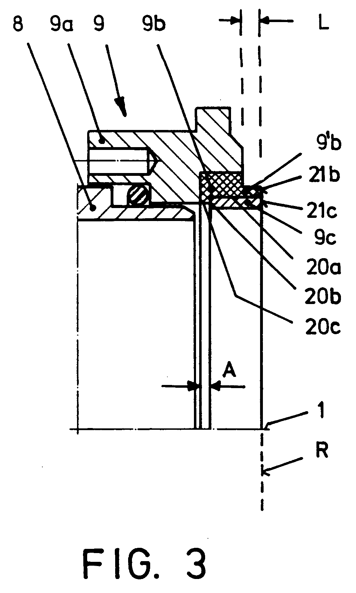

Die in Fig. 3 veranschaulichte abgeänderte Ausführungsform der ersten Ringanordnung 9 unterscheide sich von der Ausführungsform gemäß Fig. 2 dadurch, daß die Innenfläche des einen kleineren Elastizitätsmodul als 4 x 10⁴ N/mm² aufweisenden ringförmigen Körpers 9b gestuft ausgebildet ist. Dabei nimmt die den größeren Durchmesser aufweisende, zylindrische und zur Längsachse 1 koaxiale Innenfläche 20a, welche von der Radialebene R ausgeht, das ringförmige Teil 9c auf, welches einen größeren Elastizitätsmodul als 10 x 10⁴ N/mm² besitzt. Diese Innenfläche 20a geht über eine Innenschulter 20b in eine ebenfalls zur Längsachse koaxiale zylindrische Innenfläche 20c über. Das ringförmige Teil 9c liegt mit seiner rückseitigen, von der Gleitfläche abgekehrten Stirnfläche an der Innenschulter 20b an, ohne mit dem ringförmigen Teil 9a in Berührung zu gelangen, wobei jedoch das ringförmige Teil 9c gegen eine axiale Verschiebung gesichert ist. Es bleibt daher, wie schon für die Ausführungsform gemäß Fig. 1 erläutert wurde, eine kleine relative Bewegungsmöglichkeit zwischen den Bauteilen 9a, 9b und 9c.

Wird die Gleitringdichtung am Innenumfang mit dem höheren Druck beaufschlagt, d.h. steht das abzudichtende Fluid im Raum 3 an, wird vorteilhaft der in der ersten Ringanordnung 9 enthaltene, einen Elastizitätsmodul von weniger als 4 x 10⁴ N/mm² aufweisende und beispielsweise aus Kohle bestehende ringförmige Körper radial innerhalb des einen größeren Elastizitätsmodul als 10 x 10⁴ N/mm² aufweisenden und beispielsweise aus Siliziumkarbid bestehenden ringförmigen Teils angeordnet. Dabei ererstrecken sich, wie in den vorstehend beschriebenen Ausführungsbeispielen der Körper und das ringförmige Teil bis zu einer gemeinsamen Radialebene Rund liegen mit ihren radial unmittelbar aneinandergrenzenden Gleitflächen an der Gleitfläche 15a der anderen Ringanordnung an.

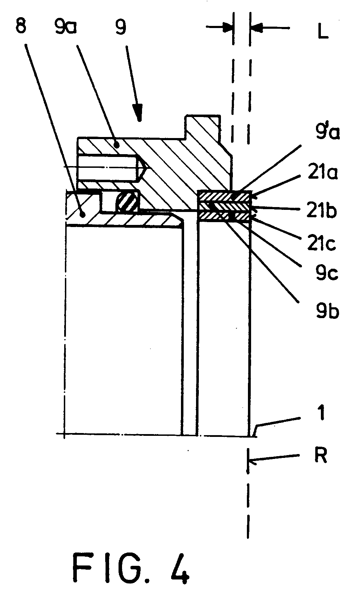

Für spezielle Anwendungsfälle der Gleitringdichtung, beispielsweise für die Abdichtung von verschleißend wirkende Feststoffe enthaltenden Fluida kann die in Fig. 4 dargestellte, weiter abgewandelte Ausführungsform der ersten Ringanordnung vorgesehen werden, bei welcher sich zwei ringförmige Teil 9′a, 9c (mit einem E-Modul > 10 x 10⁴ N/mm²) bis zur Radialebene R erstrecken und hier mit Gleitflächen 21a, 21c ausgebildet sind, welche unmittelbar innen bzw. außen an die Gleitfläche 21b des ringförmigen Körpers 9b (mit E-Modul <4 x 10⁴ N/mm²) angrenzen und, abgesehen von durch Formänderung der ersten Ringanordnung bedingte Änderungen des Dichtspaltes, gemeinsam mit den Gleitflächen 21a, 21c an der Gleitfläche 15a der zweiten Ringanordnung 15 anliegen.

Für andere spezielle Anwendungsfälle (beispielsweise wenn der höhere Druck abwechselnd im Raum 3 und 4 ansteht), kann die erste Ringanordnung zwei ringförmige Körper (mit E-Modul < 4 x 10⁴ N/mm²) enthalten, von denen der eine radial innerhalb und der andere radial außerhalb eines ringförmigen Teils (E-Modul > 10 x 10⁴ N/mm²) angeordnet ist, wobei sich die ringförmigen Körper und das ringförmige Teil bis der gemeinsamen Radialebene erstrecken und in dieser unmittelbar aneinandergrenzende Gleitflächen bilden. Es besteht auch die Möglichkeit, die erste Ringanordnung mehr als 3-schichtig auszubilden, wobei in radialer Richtung betrachtet, eine Abfolge von ringförmigen Körpern (E-Modul < 4 x 10⁴ N/mm) und ringförmigen Teilen (E-Modul > 10 x 10⁴/N/mm vorliegt, die jeweils mit ihren Gleitflächen in einer gemeinsamen Radialebene liegen.

Im Rahmen der Erfindung kann die erste Ringanordnung, deren verschiedene Ausbildungsformen vorstehend erläutert wurden, als Gegenring, d.h. in axial festgelegter, nicht durch Federn abgestützter Anordnung verwendet werden und/oder mit der Welle 2 umlaufend verwendet werden.

## Patentansprüche

1. Gleitringdichtung zur Abdichtung einer um ihre Längsachse (1) umlaufenden Welle (2), welche durch eine Wandung geführt ist, die einen unter einem ersten Druck (p₁) stehenden ersten Raum (3) von einem das abzudichtende Fluid enthaltenden zweiten Raum (4) mit einem zweiten Druck (p₂) trennt,
enthaltend eine drehfest an der Wandung gehaltenen und gegen diese abgedichtete erste Ringanordnung (9), die an ihrer eine axialen Stirnfläche eine kreisringförmige, zur Längsachse (1) koaxiale und in einer von der Längsachse lotrecht durchdrungenen Radialebene (R) gelegene erste Gleitfläche aufweist, und
enthaltend eine drehfest an der Welle (2) gehaltene und gegen diese abgedichtete zweite Ringanordnung (15), die an ihrer einen, der ersten Gleitfläche zugekehrten axialen Stirnfläche eine zweite Gleitfläche (15a) aufweist, die an der ersten Gleitfläche unter Bildung gemeinsamer ringförmiger Berührungsflächen zur Anlage bringbar ist,
wobei eine (9) der beiden Ringanordnungen (9;15) in Richtung der Längsachse (1) verschiebbar und durch wenigstens eine Feder (13) gegen die andere Ringanordnung (15) vorgespannt ist,
wobei eine der beiden Ringanordnungen (9; 15) einen aus einem Material guter Gleiteigenschaft mit einem Elastizitätsmodul kleiner als 4 x 10⁴ N/mm² bestehenden ringförmigen Körper (9b) enthält, an dem eine Gleitfläche (21b) ausgebildet ist und der an seinem von dieser Gleitfläche abgewandten axialen Endabschnitt zwischen ringförmigen Teilen (9a;9c) eingespannt ist, die beide aus einem Material mit einem Elastizitätsmodul größer als 10 x 10⁴ N/mm² bestehen und die radial nach innen gerichtete Kräfte auf den Innenumfang des ringförmigen Körpers (9b) ausüben
und wobei die andere der beiden Ringanordnungen wenigstens an dem ihre Gleitfläche (15a) aufweisenden Bestandteil aus einem Material hoher Verschleißfestigkeit mit einem Elastizitätsmodul größer ist als 10 x 10⁴ N/mm² ausgebildet ist, **dadurch gekennzeichnet,**
daß von den in der einen Ringanordnung (9) enthaltenen ringförmigen Teilen mit einem größeren Elastizitätsmodul als 10 x 10⁴ N/mm² wenigstens eines (9c) sich wenigstens mit einem kragenartigen Fortsatz bis zur Radialebene (R) erstreckt und in dieser eine weitere kreisringförmige Gleitfläche (21c) bildet, welche unmittelbar an die Gleitfläche (21b) des einen Elastizitätsmodul von weniger als 4 x 10⁴ N/mm² aufweisenden ringförmigen Körpers (9b) angrenzt, wobei diese Gleitflächen (21b, 21c) an der Gleitfläche (15a) der anderen Ringanordnung (15) anliegen.

2. Gleitringdichtung nach Anspruch 1, **dadurch gekennzeichnet,** daß das sich bis zur Radialebene (R) erstreckende ringförmige Teil (9c) an dem von seiner Gleitfläche (21c) abgewendete axiale Ende einen axialen Abstand (A) und/oder radialen Abstand zu dem anderen ringförmigen Teil (9a) einhält.

3. Gleitringdichtung nach Anspruch 1, **dadurch gekennzeichnet,** daß sich nur eines der einen größeren Elastizitätsmodul als 10 x 10⁴ N/mm² aufweisenden ringförmigen Teile (9c) bis zur Radialebene (R) erstreckt und daß dieses ringfömige Teil auf der dem niedrigeren Druck (p₁) zugewandten Seite des einen Elastizitätsmodul von weniger als 4 x 10⁴ N/mm² aufweisenden ringförmigen Körpers (9b) angeordnet ist.

4. Gleitringdichtung nach Anspruch 1, **dadurch gekennzeichnet,** daß der ringförmige Körper (9b) aus Kohle oder einem ähnlichen Material mit guter Gleiteigenschaft und niedrigem Elastizitätsmodul besteht.

5. Gleitringdichtung nach Anspruch 1, **dadurch gekennzeichnet,** daß wenigstens eines der sich bis zur Radialebene (R) erstreckenden ringförmigen Teile (9c) aus Siliziumkarbid besteht.

6. Gleitringdichtung nach Anspruch 1 oder 3, **dadurch gekennzeichnet,** daß der ringförmige Körper (9b) eine zylindrische Innenfläche aufweist und daß das in dieser Innenfläche gelagerte, sich bis zur Radialebene (R) erstreckende ringförmige Teil (9c) rohrförmige Gestalt aufweist.

7. Gleitringdichtung nach Anspruch 1 und 2, **dadurch gekennzeichnet,** daß die das ringförmige Teil (9c) lagernde Innenfläche (20a) des ringförmigen Körpers (9b) über eine Innenschulter (20b) in eine kleineren Durchmesser aufweisende Innenfläche (20c) übergeht und daß das ringförmige Teil (9c) an dem von seiner Gleitfläche (21c) abgewandten Ende an der Innenschulter (20b) abstützend anliegt.

8. Gleitringdichtung nach Anspruch 1, **dadurch gekennzeichnet,** daß die erste Ringanordnung (9) zwei ringförmige Teile (9a, 9c) mit einem Elastizitätsmodul) 10 x 10⁴ N/mm² und einen zwischen diesen angeordneten ringförmigen Körper (9b) mit einem Elastizitätsmodul < 4 x 10⁴ N/mm² enthält, wobei alle Bauteile unmittelbar aneinandergrenzende Gleitflächen (21a, 21b, 21c) aufweisen, welche in einer gemeinsamen Radialebene (R) liegen.

9. Gleitringdichtung nach Anspruch 1, **dadurch gekennzeichnet**, daß die erste Ringanordnung (9) zwei ringförmige Körper mit einem Elastizitätsmodul < 4 x 10⁴ N/mm² und ein zwischen diesen angeordnetes ringförmiges Teil mit eine Elastizitätsmodul > 10 x 10⁴ N/mm² enthält, wobei alle Bauteile unmittelbar aneinandergrenzende Gleitflächen (21a, 21b, 21c) aufweisen, welche in einer gemeinsamen Radialebene (R) liegen.

## Claims

1. Slide ring seal for sealing a shaft (2) which rotates about its longitudinal axis (1) and which passes through a wall which separates a first space (3) at a first pressure (p₁) from a second space (4) containing the fluid to be sealed with a second pressure (p₂),
including a first ring arrangement (9) which is rotationally fixedly mounted on the wall and is sealed with respect to it and which, on its one axial end face, has an annular first sliding surface coaxial with the longitudinal axis (1) and situated in a radial plane (R) through which the longitudinal axis passes perpendicularly, and
including a second ring arrangement (15) which is rotationally fixedly mounted on the shaft (2) and sealed with respect to it and which, on its one axial end face directed towards the first sliding surface, has a second sliding surface (15a), which is movable into engagement with the first sliding surface to define common annular contact surfaces,
whereby one (9) of the two ring arrangements (9;15) is slidable in the direction of the longitudinal axis (1) and is biased by means of at least one spring (13) against the other ring arrangement (15),
whereby one of the two ring arrangements (9;15) includes an annular body (9b) which comprises a material with good sliding properties and with a modulus of elasticity smaller than 4 x 10⁴ N/mm² and on which a sliding surface (21b) is formed and which is clamped at its axial end section remote from this sliding surface between annular members (9a;9c), which both comprise a material with a modulus of elasticity greater than 10 x 10⁴ N/mm² and which exert radially inwardly directed forces on the internal periphery of the annular body (9b)
and whereby the other of the two ring arrangements is constructed, at least at its component affording its sliding surface (15a), of a material of high wear resistance with a modulus of elasticity which is greater than 10 x 10⁴ N/mm², characterised in
that of the annular members included in the one ring arrangement (9) with a modulus of elasticity greater than 10 x 10⁴ N/mm² at least one (9c) extends with a collar-shaped extension to the radial plane (R) and forms a further circular annular sliding surface (21c) in it which is directly adjacent to the sliding surface (21b) of the annular body (9b) having a modulus of elasticity of less than 4 x 10⁴ N/mm², whereby the sliding surfaces (21b,21c) engage the sliding surface (15a) of the other ring arrangement (15).

2. Slide ring seal as claimed in claim 1, characterised in that the annular member (9c) which extends to the radial plane (R), maintains an axial spacing (A) and/or radial spacing from the other annular member (9a) at the axial end directed away from its sliding surface (21c).

3. Slide ring seal as claimed in claim 1, characterised in that only one of the annular members (9c), which have a modulus of elasticity greater than 10 x 10⁴ N/mm², extends to the radial plane (R) and that this annular member is arranged on the side directed towards the lower pressure (p₁) of the annular body (9b) which has a modulus of elasticity of less than 4 x 10⁴ N/mm².

4. Slide ring seal as claimed in claim 1, characterised in that the annular body (9b) comprises graphite or a similar material with good sliding properties and a low modulus of elasticity.

5. Slide ring seal as claimed in claim 1, characterised in that at least one of the annular members (9c), which extend to the radial plane (R), comprises silicon carbide.

6. Slide ring seal as claimed in claim 1 or 3, characterised in that the annular body (9b) has a cylindrical internal surface and that the annular member (9c), which is mounted in this internal surface and extends to the radial plane (R), has a tubular shape.

7. Slide ring seal as claimed in claims 1 and 2, characterised in that the internal surface (20a) of the annular body (9b) supporting the annular member (9c) merges via an internal shoulder (20b) into an internal surface (20c) having a smaller diameter and that the annular member (9c) bearingly engages the internal shoulder (20b) at the end remote from its sliding surface (21c).

8. Slide ring seal as claimed in claim 1, characterised in that the first ring arrangement (9) includes two annular members (9a,9c) with a modulus of elasticity > 10 x 10⁴ N/mm² and an annular body (9b) arranged between them with a modulus of elasticity < 4 x 10⁴ N/mm², whereby all the components have directly adjacent sliding surfaces (21a,21b,21c) which lie in a common radial plane (R).

9. Slide ring seal as claimed in claim 1, characterised in that the first ring arrangement (9) includes two annular bodies with a modulus of elasticity < 4 x 10⁴ N/mm² and an annular member arranged between them with a modulus of elasticity > 10 x 10⁴ N/mm², whereby all the components have directly adjacent sliding surfaces (21a,21b,21c) which lie in a common radial plane.

## Revendications

1. Joint d'étanchéité glissant pour assurer l'étanchéité d'un arbre (2) tournant autour de son axe longitudinal (1), qui est guidé par une paroi, laquelle sépare un premier espace soumis à une première pression (p₁), d'un second espace (3) contenant un fluide à garder sous étanchéité soumis à une seconde pression (p₂), contenant un premier dispositif annulaire (9) maintenu fixe en rotation sur la paroi et rendu étanche vis à vis de celle-ci, qui comporte à l'une de ses surfaces frontales axiales, une première surface de glissement annulaire, coaxiale à l'axe longitudinal (1) et située dans un plan radial (R) traversé verticalement par l'axe longitudinal (1), et comprenant un second dispositif annulaire (15) maintenu fixe en rotation sur l'arbre (2) et rendu étanche vis à vis de celui-ci, qui comporte sur une de ses surfaces frontales axiales, tournées vers la première surface de glissement, une seconde surface de glissement (15a), qui peut être amenée en contact sur la première surface de glissement en formant des surfaces de contact annulaires communes, l'un (9) des deux dispositifs annulaires (9, 15) pouvant être déplacé dans le sens de l'axe longitudinal (1) et étant précontraint par au moins un ressort (13) contre l'autre dispositif annulaire (15), l'un de ces dispositifs annulaire (9, 15) contenant un corps annulaire (9b) constitué d'un matériau à bonnes propriétés de glissement et présentant un module d'élasticité inférieur à 4x10⁴ N/mm², sur lequel est formée une surface de glissement (21b) et qui est précontraint à sa section terminale axiale faisant opposée à cette surface de glissement entre les parties annulaires (9a, 9c), qui toutes les deux sont constituées d'un matériau présentant un module d'élasticité supérieur à 10x10⁴ N/mm² et qui exercent radialement des forces dirigées vers l'intérieur sur le pourtour intérieur du corps cylindrique (9b) et l'autre des deux dispositifs annulaires au moins sur la partie constitutive présentant la surface de glissement (15a) étant formée d'un matériau à haute résistance à l'usure présentant un module d'élasticité supérieur à 10 x 10⁴ N/mm², caractérisé en ce que parmi les pièces annulaires contenues dans le premier dispositif annulaire (9) contenant et possédant un module d'élasticité supérieur à 10 x 10⁴ N/mm² au moins l'une (9c) s'étend au moins avec une saillie en forme de collet jusqu'au plan radial R et forme dans ce dernier une autre surface de glissement 21c, qui se limite directement sur la surface de glissement 21b du corps annulaire présentant un module d'élasticité inférieur à 4 x 10⁴ N/mm², ces surfaces de glissement (21b, 21c) se trouvant contre la surface de frottement de l'autre dispositif annulaire (15)

2. Joint glissant selon la revendication 1, caractérisé en ce que la pièce annulaire (9c) s'étendant jusqu'au plan radial (R) à l'extrémité axiale opposée à sa surface de glissement (21c) contient un intervalle axial (A) et/ou un intervalle radial par rapport à l'autre pièce annulaire (9a).

3. Joint glissant selon la revendication 1, caractérisé en ce que seulement une des pièces annulaires (9c) présentant un module d'élasticité supérieur à 10 x 10⁴ N/mm² s'étend jusqu'au plan radial (R), et en ce que cette pièce annulaire est disposée sur le côté tournée vers la basse pression (p₁) du corps annulaire (9b) présentant un module d'élasticité inférieur à 4 x 10⁴ N/mm².

4. Joint glissant selon la revendication 1, caractérisé en ce que le corps annulaire (9b) se compose de carbone ou d'un matériau analogue possédant de bonnes propriétés de frottement et un faible module d'élasticité.

5. Joint glissant selon la revendication 1, caractérisé en ce qu'au moins une des pièces annulaires (9c) s'étendant jusqu'au plan radial (R) est constituée de carbure de silicium.

6. Joint glissant selon la revendication 1 ou 3, caractérisé en ce que le corps annulaire (9b) présente une surface intérieure cylindrique et en ce que la pièce annulaire (9c) montée sur cette surface intérieure et s'étendant jusqu'au plan radial (R) présente une forme tubulaire.

7. Joint mécanique selon la revendication 1 et 2, caractérisé en ce que la surface intérieure (20a) du corps annulaire (9b) supportant la pièce annulaire (9c) évolue par un épaulement intérieur (20b) en une surface intérieure (20c) présentant un diamètre plus petit et en ce que la pièce annulaire (9c) se situe en appui à son extrémité opposée à la surface de glissement (21c) sur l'épaulement (20b).

8. Joint glissant selon la revendication 1, caractérisé en ce que le premier dispositif annulaire (9) comporte deux pièces annulaires (9a, 9c) possédant un module d'élasticité supérieur à 10 x 10⁴ N/mm² et un corps annulaire (9b) possédant un module d'élasticité inférieur à 4 x 10⁴ N/mm² disposées entre elles, tous les composants comportant des surfaces de glissement (21a, 21b, 21c) se limitant directement entre elles, qui se situent dans un plan radial (R) commun.

9. Joint glissant selon la revendication 1, caractérisé en ce que le premier dispositif annulaire (9) comporte deux corps annulaires présentant un module d'élasticité inférieur à 4 x 10⁴ N/mm² et une pièce annulaire présentant un module d'élasticité supérieur à 10 x 10⁴ N/mm², tous les composants comportant des surfaces de glissement (21a, 21b, 21c) disposées au voisinage les unes des autres qui se trouvent dans un plan radial (R) commun.
